# EUROPÄISCHE PATENTSCHRIFT

(11) **EP 1 206 823 B1**
(45) Veröffentlichungstag und Bekanntmachung des Hinweises auf die Patenterteilung: **08.10.2008**
(21) Anmeldenummer: 00958229.7
(22) Anmeldetag: 09.08.2000
(51) Int. Cl.: H02H 3/33

(54) **SCHUTZEINRICHTUNG, INSBESONDERE FEHLERSTROM-SCHUTZEINRICHTUNG**
PROTECTIVE DEVICE, IN PARTICULAR A FAULT CURRENT PROTECTIVE DEVICE
DISPOSITIF DE PROTECTION, EN PARTICULIER DISPOSITIF DE PROTECTION ACTIONNE PAR COURANT DE DEFAUT

(30) Priorität: 25.08.1999 DE 19940344
(43) Veröffentlichungstag der Anmeldung: 22.05.2002
(73) Patentinhaber: SIEMENS AKTIENGESELLSCHAFT, 80333 München (DE)
(72) Erfinder: KLEEMEIER, Manfred, D-93073 Neutraubling (DE); LEHNER, Gerald, D-93083 Obertraubling (DE); SCHMID, Reinhard, D-93051 Regensburg (DE)
(86) Internationale Anmeldenummer: PCT/DE2000/002656
(87) Internationale Veröffentlichungsnummer: WO 2001/015297

(56) Entgegenhaltungen:
- EP-A- 0 855 779
- SOLLEDER: "Warum Fehlerstrom-Schutzschalter mit netzspannungsunabhängiger Auslösung?" ELEKTROTECHNISCHE ZEITSCHRIFT - ETZ., Bd. 107, Nr. 20, Oktober 1986 (1986-10), Seiten 938-945, XP002153372 VDE VERLAG GMBH. BERLIN., DE ISSN: 0948-7387 in der Anmeldung erwähnt

## Beschreibung

Die Erfindung bezieht sich auf eine Schutzeinrichtung mit mindestens einem Erfassungssystem mit einem Summenstromwandler, dessen Sekundärwicklung in einem Auslösekreis ein Auslöserelais zur Betätigung einer ein Leiternetz schaltenden Schaltmechanik nachgeschaltet ist. Als Auslösekreis wird ein Stromkreis bezeichnet, entlang dessen eine elektrische Kontrollgröße erzeugt und diese bewertet wird, und der ein elektrisches Auslösesignal erzeugt, das bei Vorliegen einer Auslösebedingung ein Auslöserelais aktiviert, d. h. zur Auslösung bringt. Unter Schutzeinrichtung wird hierbei eine Fehlerstrom-Schutzeinrichtung oder eine Differenzstrom-Schutzeinrichtung verstanden.

Eine derartige Fehlerstrom-Schutzeinrichtung dient zur Sicherstellung des Schutzes gegen einen gefährlichen Körperstrom in einer elektrischen Anlage. Ein solcher tritt beispielsweise dann auf, wenn eine Person ein spannungsführendes Teil einer elektrischen Anlage berührt. Der Fehlerstrom (oder auch Differenzstrom) fließt dann über die Person als Körperstrom gegen Erde ab. Die zum Schutz gegen gefährliche Körperströme eingesetzte Schutzeinrichtung trennt bei Überschreiten des sogenannten Auslösefehlerstroms den betroffenen Stromkreis sicher und schnell vom Netz.

Der Aufbau bekannter Fehlerstrom-Schutzeinrichtungen ist beispielsweise aus der "etc" (1986), Heft 20, Seiten 938 bis 945, bekannt. Dort sind in den Bildern 1 bis 3 Prinzipschaltbilder und Funktionsprinzipien eines Fehlerstrom-Schutzschalters (FI-Schutzschalter) und eines Differenzstrom-Schutzschalters (DI-Schutzschalter) dargestellt. Der FI- und der DI-Schutzschalter sind in ähnlicher Art und Weise aus drei Baugruppen aufgebaut. In der Sekundärwicklung eines Summenstromwandlers, durch dessen Wandlerkern alle stromführenden Leiter eines Leiternetzes geführt sind, wird im Fall eines Fehlerstroms ein Spannungssignal induziert, das ein über eine Auslösekreiselektronik oder Auslöseschaltung mit der Sekundärwicklung verbundenes Auslöserelais ansteuert. Das Auslöserelais betätigt daraufhin eine Schaltmechanik, mittels derer die Leiter des Leiternetzes getrennt werden. Dabei ist die Auslöseschaltung des FI-Schutzschalters ausschließlich induktiv über den Summenstromwandler an das Leiternetz gekoppelt. Er entnimmt somit die zur Auslösung notwendige Energie netzspannungsunabhängig aus dem Fehlerstrom selbst. Dagegen erfolgt beim DI-Schutzschalter die Auslösung netzspannungsabhängig mittels einer Verstärkerschaltung, die galvanisch mit dem Leiternetz verbunden ist.

Der Auslösefehlerstrom ist in der Norm DIN VDE 0664 Teil 10 (= deutsche Übersetzung der Vorschrift EN 61008) definiert. Er ist der Wert des Fehlerstroms, der einen FI- oder DI-Schutzschalter unter festgelegten Bedingungen zum Auslösen bringt. Dabei entspricht bei z. B. sinusförmigen Wechselfehlerströmen der Auslösefehlerstrom dem 0,5- bis 1-fachen des Bemessungsfehlerstroms, der wiederum ein Maß für die Auslöseempfindlichkeit des FI- oder DI-Schutzschalters ist. So darf beispielsweise zum Personenschutz bei direktem Berühren aktiver Teile der Bemessungsfehlerstrom nicht mehr als 30mA betragen, während eine FI-Schutzeinrichtung mit einem Bemessungsfehlerstrom größer 30mA Schutz nur bei indirektem Berühren bietet.

Das Auslöseverhalten des Schutzschalters ist zudem üblicherweise auch auf eine bestimmte Frequenz, z. B. auf 50Hz, oder auf einen bestimmten Frequenzbereich, z. B. auf 50Hz bis 400Hz, abgestimmt. Trotz dieser Abstimmung können diese Schutzeinrichtungen dennoch auch bei höheren Frequenzen Personenschutz bieten, sofern der Auslösefehlerstrom unterhalb der vorgegebenen Grenzkurve für Herzkammerflimmern nach der Vorschrift IEC 60479 liegt. Entsprechend dieser Grenzkurve darf der Auslösestrom bei 1kHz bis etwa 420mA ansteigen, um noch Personenschutz zu bieten.

Um darüber hinaus auch einen Brandschutz bei einer derartigen Schutzeinrichtung sicherzustellen, darf zur Brandvermeidung eine elektrische Leistung von maximal 100W unabhängig von der Frequenz nicht überschritten werden. Legt man eine Spannung zwischen einem Außenleiter und Erde von 230V zugrunde, ergibt sich ein Auslösefehlerstrom von maximal 430mA, der zur Brandvermeidung nicht überschritten werden darf. Bei anderen Netzspannungen ergeben sich entsprechende andere Grenzwerte für den Auslösefehlerstrom.

Problematisch bei bisherigen DI- und FI-Schutzeinrichtungen ist es jedoch, dass deren Auslösefehlerstrom mit zunehmender Frequenz stetig ansteigt und bei hohen Frequenzen, insbesondere im Kilohertz-Bereich, den für den Brandschutz maximal vertretbaren Wert von in diesem Beispiel 430mA überschreitet. Bei Anwendungsfällen in elektrischen Anlagen, in denen Frequenzumrichter und Geräte mit getakteten Stromversorgungen eingesetzt sind, können zudem im Fehlerfall auch Fehlerströme mit Fehlerstromfrequenzen bis etwa 20kHz auftreten mit der Folge, dass der Auslösefehlerstrom der Schutzeinrichtung oder des Schutzschalters in der beschriebenen Weise über den Grenzwert hinaus ansteigt und ein Brandschutz nicht mehr in allen Fällen sichergestellt ist. Durch die stark zunehmende Anzahl von Betriebsmitteln, die im Fehlerfall solche Fehlerströme mit höherer Frequenz generieren können, gewinnt dieses Problem zunehmend an Bedeutung.

Der Erfindung liegt daher die Aufgabe zugrunde, eine Schutzeinrichtung, insbesondere eine Fehlerstrom-Schutzeinrichtung, anzugeben, mit der auch Fehlerströme mit oberhalb von 1kHz liegender Fehlerstromfrequenz erfasst werden können, wobei der Auslösefehlerstrom insbesondere über einen Frequenzbereich von ca. 50Hz bis mindestens 20kHz die jeweils vorgegebenen Grenzwerte hinsichtlich eines Personen- und Brandschutzes nicht überschreiten soll.

Diese Aufgabe wird erfindungsgemäß gelöst durch die Merkmale des Anspruchs 1.

Die Erfindung geht dabei von der Überlegung aus, dass bei einer derartigen Schutzeinrichtung auch in einem großen Frequenzbereich von z. B. 50Hz bis mindestens 20kHz sowohl ein Brandschutz sichergestellt ist, wenn der Auslösefehlerstrom unterhalb von 430mA bei 100W und 230V liegt, als auch gleichzeitig ein Personenschutz gegeben ist, wenn der Auslösefehlerstrom stets unterhalb der Grenzkurve für Herzkammerflimmern gemäß IEC 60479 liegt. Da erkanntermaßen die Grenzkurve für Herzkammerflimmern bei einer Fehlerstromfrequenz von ca. 1kHz den Wert von 420mA und damit praktisch den Grenzwert für Brandschutz erreicht, müsste der Auslösefehlerstrom lediglich ab einer entsprechenden Übernahmefrequenz auf diesen Grenzwert begrenzt werden, während der Auslösefehlerstrom bei Fehlerstromfrequenzen kleiner dieser Übernahmefrequenz unterhalb der Grenzkurve für Herzkammerflimmern und dabei möglichst nahe an dieser entlang verlaufen sollte.

Dies wird in zuverlässiger Weise durch zwei unterschiedlich aufgebaute Erfassungssysteme erreicht, von denen eines die Auslösefunktion unterhalb und das andere die Auslösefunktion oberhalb dieser beispielsweise zwischen 1kHz und 5kHz, vorzugsweise im Bereich zwischen 1kHz und 2kHz, liegenden Übernahmefrequenz übernimmt.

Ein die Auslösefunktion unterhalb der Übernahmefrequenz übernehmendes erstes Erfassungssystem ist zweckmäßigerweise auf eine Fehlerstromfrequenz von 50Hz oder für Fehlerströme eines vergleichsweise breitbandigen Frequenzbereichs von z. B. 50Hz bis 400Hz abgestimmt, so dass bei dieser Frequenz bzw. in diesem Frequenzbereich die Auslösebedingungen gemäß der Vorschrift EN 61008 (entspricht VDE 0664 Teil 10) für eine pulsstromsensitive Schutzeinrichtung (entspricht Typ A gemäß EN 61008) erfüllt werden. Das erste Erfassungssystem kann um ein Erfassungssystem für glatte Gleichfehlerströme mit einer Fehlerstromfrequenz von 0Hz erweitert werden, so dass insgesamt eine allstromsensitive Schutzeinrichtung bereitgestellt ist.

Das zweite Erfassungssystem ist auf eine gegenüber dem ersten Erfassungssystem vergleichsweise hohen Frequenzbereich derart abgestimmt, dass zumindest ab der Übernahmefrequenz das Auslösesignal des zweiten Erfassungssystems größer ist als das Auslösesignal des ersten Erfassungssystems. Dadurch wird vorteilhafterweise erreicht, dass ab dieser Übernahmefrequenz das zweite Erfassungssystem die Auslösefunktion übernimmt. Dadurch liegt der Auslösewert, d. h. der Auslösefehlerstrom entweder des ersten Erfassungssystems oder des zweiten Erfassungssystems stets unter dem jeweils niedrigeren Grenzwert für Herzkammerflimmern oder Brandschutz. Somit ist sichergestellt ist, dass der Auslösefehlerstrom der gesamten Schutzeinrichtung stets unter diesem Grenzwert liegt.

Mittels dieser beiden, auf unterschiedliche Frequenzbereiche abgestimmten Erfassungssysteme liegt der Auslösefehlerstrom der Schutzeinrichtung im Bereich oberhalb der Übernahmefrequenz sowohl unterhalb der Grenzkurve für Herzkammerflimmern als auch unterhalb der Grenzkurve für einen zuverlässigen Brandschutz. Unterhalb der Übernahmefrequenz liegt der Auslösefehlerstrom darüber hinaus auch stets unterhalb der ab etwa 50Hz mit zunehmender Fehlerstromfrequenz stetig ansteigenden Grenzkurve für Herzkammerflimmern.

Die beiden Erfassungssysteme können jeweils aus einem Summenstromwandler und jeweils einem über dessen Sekundärwicklung gespeisten Auslöserelais aufgebaut sein. Auch können beide Erfassungssysteme ein diesen gemeinsames Auslöserelais speisen. Zweckmäßigerweise ist jedoch ein einzelner Summenstromwandler für beide Erfassungssysteme vorgesehen, wobei der bevorzugt zur Erfassung sowohl niederfrequenter als auch hochfrequenter Fehlerströme ausgelegte Summenstromwandler dann zwei Sekundärwicklungen aufweist, die wiederum vorzugsweise ein gemeinsames Auslöserelais speisen.

Dazu ist der Wandlerkern des einzelnen Summenstromwandlers für die Erfassung sinusförmiger Wechselfehlerströme entsprechend Typ AC der der deutschen Norm VDE 0664, Teil 10, entsprechenden Vorschrift EN 61008 oder für die Erfassung von sinusförmigen Wechselfehlerströmen und pulsierenden Gleichfehlerströmen gemäß Typ A der Norm EN 61008 ausgelegt. Zusätzlich ist der Wandlerkern zur Erfassung sowohl niederfrequenter Fehlerströme, insbesondere unterhalb von 1kHz, als auch hochfrequenter Fehlerströme, insbesondere ab 1kHz bis mindestens 20kHz, ausgelegt. Hochfrequente Fehlerstromformen von z. B. mehreren Kilohertz werden insbesondere von einem Summenstromwandler erfasst, dessen Wandlerkern aus nanokristallinem oder amorphem Werkstoff gebildet ist. Der Einsatz von nanokristallinem Kernwerkstoff zu diesem Zweck ist z. B. aus der DE 197 02 371 A1 an sich bekannt. Ein derartiger Werkstoff ist eine rasch erstarrte weichmagnetische Legierung mit dem Vorteil eines gegenüber kristallinen weichmagnetischen Werkstoffen zwei- bis dreimal höheren elektrischen Widerstandes. In Verbindung mit herstellungsbedingt geringen Banddicken von typischerweise 20µm werden Wirbelstromverluste deutlich reduziert, so dass dieser amorphe oder nanokristalline Werkstoff insbesondere für den hochfrequenten Bereich vorteilhaft ist.

Um die beiden Erfassungssysteme voneinander zu entkoppeln, weist jedes der beiden Erfassungssysteme jeweils einen Gleichrichter auf. Jeder der Gleichrichter ist wechselstromseitig mit der dem jeweiligen Erfassungssystem zugeordneten Sekundärwicklung des vorzugsweise beiden Erfassungssystemen gemeinsamen Summenstromwandlers verbunden. Da beide Gleichrichter gleichstromseitig vorzugsweise mit einem einzelnen Auslöserelais verbunden sind, ist in mindestens einen der beiden dadurch gebildeten Gleichstromkreise eine Entkopplungsdiode geschaltet. Dadurch ist sichergestellt, dass das Auslöserelais keine dem jeweils in Auslösefunktion arbeitenden Erfassungssystem energieentziehende Last des jeweils anderen Erfassungssystems darstellt.

Bei Verwendung eines einzelnen Summenstromwandlers mit zwei Sekundärwicklungen für die beiden Erfassungssysteme können infolge von hochfrequenten Störfehlerströmen Kreisströme über die beiden Erfassungssysteme und über das Auslöserelais fließen. Da eine zur Beherrschung derartiger, üblicherweise transienter Störeinflüsse oder Überspannungen vorgesehene Kurzzeitverzögerung zumindest im zweiten Erfassungssystem für hochfrequente Fehlerströme zur gleichzeitigen Beherrschung derartiger Kreisströme möglicherweise nicht ausreichend ist, ist zweckmäßigerweise in das zweite Erfassungssystem für hochfrequente Fehlerströme gleichstromseitig mindestens eine Drossel geschaltet. Dadurch können derartige Kreisströme derart gedämpft werden, dass kurzzeitige hochfrequente Störfehlerströme, beispielsweise infolge von Schalthandlungen im Netz, zu keinen Fehlauslösungen führen.

Das erste Erfassungssystem weist zweckmäßigerweise einen Tiefpass, vorzugsweise in Form eines Parallelkondensators, auf. Dieser ist derart ausgelegt bzw. bemessen, dass der Auslösefehlerstrom zumindest bis zur Übernahmefrequenz mit zunehmender Fehlerstromfrequenz ansteigt und dabei unterhalb der Grenzkurve für Herzkammerflimmern liegt. Dabei ist bei Verwendung eines Parallelkondensators dessen Kapazität vorzugsweise derart bemessen, dass sinusförmige Wechselfehlerströme mit zunehmender Frequenz zu gerade derart steil ansteigenden Auslösefehlerströmen führen, dass der von der Fehlerstromfrequenz abhängige Verlauf des Auslösefehlerstroms noch mit ausreichendem Sicherheitsabstand zur Grenzkurve für Herzkammerflimmern unterhalb dieser, jedoch möglichst nahe an dieser liegt. Durch einen derartigen, relativ steilen Anstieg des Auslösefehlerstrom-Verlaufs ist das erste Erfassungssystem und somit die Schutzeinrichtung unempfindlich gegenüber transienten Fehlerströmen mit der Folge, dass die Schutzeinrichtung eine besonders hohe Fehlauslösefestigkeit aufweist.

Als funktionsbestimmendes Bauteil weist das erste Erfassungssystem für niederfrequente Fehlerströme einen Reihenwiderstand auf, der der diesem ersten Erfassungssystem zugeordneten Sekundärwicklung des Summenstromwandlers nachgeschaltet und der als Tiefpass wirksamen Parallelkapazität vorgeschaltet ist. Die Sekundärwicklung des ersten Erfassungssystems ist somit auch bei hohen Frequenzen nicht direkt über die Parallelkapazität kurzgeschlossen. Dadurch ist sichergestellt, dass auch bei hochfrequenten Fehlerströmen, insbesondere über der Übernahmefrequenz, das zweite Erfassungssystem stets ein verwertbares Eingangssignal erhält. Der Reihenwiderstand des ersten Erfassungssystems wirkt somit bei hohen Fehlerstromfrequenzen als definierte Bürde für den Summenstromwandler und ist in hohem Maße mitbestimmend für den Auslösefehlerstrom des zweiten Erfassungssystems oberhalb der Übernahmefrequenz.

Vorzugsweise ist dem Gleichrichter zumindest im ersten Erfassungssystem ein Glättungskondensator nachgeschaltet, der gleichstromseitig dem Auslöserelais parallelgeschaltet ist. Eine dem Auslöserelais im ersten Erfassungssystem gleichstromseitig parallelgeschaltete Zenerdiode begrenzt die Spannung am Auslöserelais und verhindert dessen Ummagnetisierung bei hohen Fehlerströmen, um ein Auslöseversagen zu verhindern. Die eine Zenerspannung von vorzugsweise 1V aufweisende Zenerdiode ist technologiebedingt in Durchlassrichtung betrieben und verbessert zusätzlich die Stoßstromfestigkeit der Schutzeinrichtung.

Um eine Fehlauslösung bei kurzzeitigen hochfrequenten Fehlerströmen - wie diese beim Schalten von induktiven Verbrauchern an langen Leitungen auftreten können - zu vermeiden, ist das zweite Erfassungssystem vorzugsweise kurzzeitverzögert. Dazu weist das zweite Erfassungssystem ein durch einen Parallelkondensator und einen Reihenwiderstand gebildetes Zeitverzögerungsglied, d. h. eine Verzögerungsschaltung auf. Die Auslösezeit ist bei einem Fehlerstrom von 430mA und einer Fehlerstromfrequenz größer oder gleich 3kHz auf ca. 300ms eingestellt. Die Auslösezeit ist somit deutlich kürzer als die geforderte Abschaltzeit im TN-Netz, wodurch ein besonders zuverlässiger Brandschutz realisiert ist.

Zweckmäßigerweise ist dem Auslöserelais sowohl im ersten Erfassungssystem als auch im zweiten Erfassungssystem mindestens eine Zenerdiode parallelgeschaltet. Während die Zenerdiode des ersten Erfassungssystems die Spannung am Auslöserelais begrenzt und eine zu einem Auslöseversagen führende Ummagnetisierung des Auslöserelais bei hohen Fehlerströmen verhindert, werden durch vorzugsweise zwei in Reihe geschaltete Zenerdioden im zweiten Erfassungssystem die in der diesem zugeordneten Sekundärwicklung des Summenstromwandlers induzierten Störspannungen zusätzlich begrenzt. In Verbindung mit dem Zeitverzögerungsglied (Verzögerungsschaltung) werden die begrenzten Störspannungen ausgeblendet. Ein zweckmäßigerweise dem Kondensator des Zeitverzögerungsgliedes parallelgeschalteter Widerstand ermöglicht nach einem solchen Störvorgang eine vollständige Entladung des Kondensators. Als Überspannungsschutz für die Bauteile einerseits sowie für das Erreichen einer möglichst großen Stoßstromfestigkeit andererseits weist jedes Erfassungssystem außerdem ein der jeweiligen Sekundärwicklung parallelgeschaltetes Überspannungsschutzelement, vorzugsweise eine Suppressordiode, auf.

Nachfolgend wird ein Ausführungsbeispiel der Erfindung anhand einer Zeichnung näher erläutert. Darin zeigen:
- FIG 1: schematisch ein Prinzipschaltbild einer Fehlerstrom-Schutzeinrichtung mit zwei Erfassungssystemen,
- FIG 2: die Erfassungssysteme der Schutzeinrichtung gemäß FIG 1 in einem Blockschaltbild,
- FIG 3: in einem logarithmisch aufgetragenen Frequenz/-Auslösefehlerstrom-Diagramm eine Grenzkurve für Herzkammerflimmern gemäß IEC 60479 und eine Grenzkurve zur Brandvermeidung sowie die Auslösefehlerstromkurve der Schutzeinrichtung,
- FIG 4: in einem Diagramm gemäß FIG 3 die sich bei einer Übernahmefrequenz schneidenden Auslösestromkurven der beiden Erfassungssysteme einer allstromsensitiven Schutzeinrichtung, und
- FIG 5: in einer Darstellung gemäß FIG 4 den Auslösestromverlauf einer pulsstromsensitiven Schutzeinrichtung.

Einander entsprechende Teile sind in allen Figuren mit den gleichen Bezugszeichen versehen.

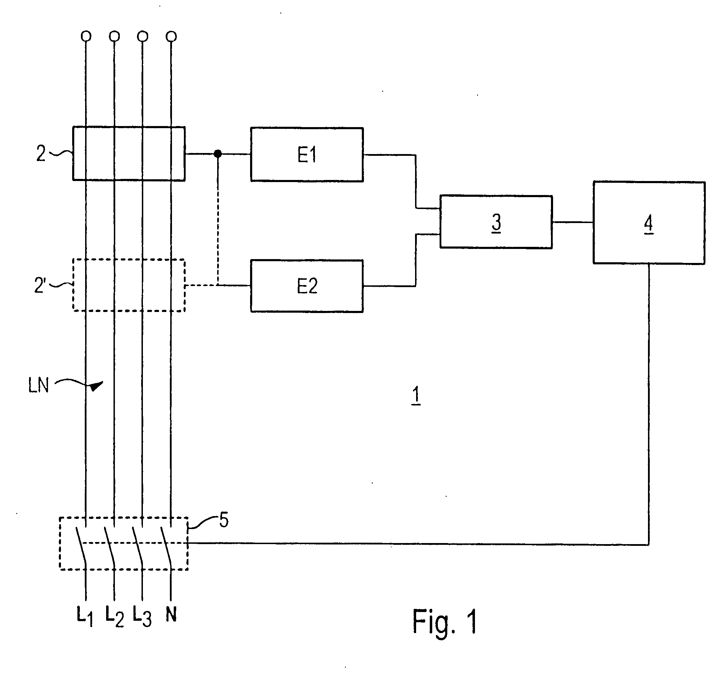

Die in FIG 1 prinzipiell dargestellte Fehlerstrom-Schutzeinrichtung 1 weist zwei Erfassungssysteme E1 und E2 mit einem diesen gemeinsamen Summenstromwandler 2 oder jeweils einem Summenstromwandler 2 bzw. 2' auf. Die beiden Erfassungssysteme E1 und E2 speisen ein diesen gemeinsames Auslöserelais 3, das mit einer Schaltmechanik 4 mechanisch gekoppelt ist. Die in nicht näher dargestellter Art und Weise als Entklinkungssystem ausgeführte Schaltmechanik 4 ist mit einem Kontaktsystem 5 gekoppelt. Durch den oder jeden Summenstromwandler 2,2' sind drei Phasenleiter Lᵢ, mit i = 1,2,3, sowie ein Neutralleiter N eines 4-Leiternetzes LN geführt. Die FI-Schutzeinrichtung 1 ist dabei einem (nicht dargestellten) elektrischen Verbraucher vorgeschaltet, welcher aus dem Leiternetz LN mit Strom versorgt wird.

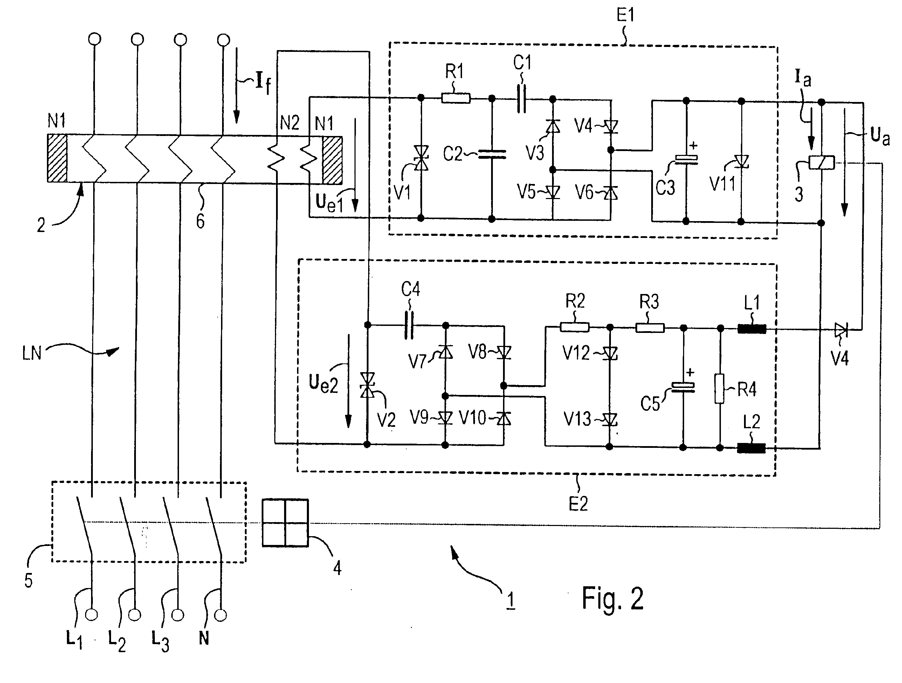

FIG 2 zeigt eine bevorzugte Schaltungsausführung der beiden Erfassungssysteme E1 und E2, die jeweils mit einer Sekundärwicklung N1 bzw. N2 des diesen gemeinsamen Summenstromwandlers 2 verbunden sind. Der Summenstromwandler 2 weist einen aus nanokristallinem oder amorphem Werkstoff bestehenden Wandlerkern 6 auf, der zur Erfassung sowohl niederfrequenter als auch hochfrequenter Fehlerströme I_{f} geeignet ist. Der Summenstromwandler 2 ist besonders verlustarm ausgeführt und daher zur Erfassung und Übertragung auch hochfrequenter Fehlerströme I_{f}, bis zu einer Fehlerstromfrequenz f von ca. 20kHz geeignet.

Im störungsfreien Betrieb des Leiternetzes LN und des Verbrauchers ist die vektorielle Summe der durch den Wandlerkern 6 fließenden Ströme stets Null. Eine Störung tritt dann auf, wenn z. B. infolge eines Isolationsfehlers ein Teil des zugeführten Stromes verbraucherseitig über Erde als Fehler-oder Differenzstrom I_{f} abgeführt wird. In diesem Fall ergibt die vektorielle Summe der durch den Wandlerkern 6 fließenden Ströme einen von Null verschiedenen Betrag. Dieser Differenz-oder Fehlerstrom I_{f} induziert in den Sekundärwicklungen N1, N2 ein als Maß für den Fehlerstrom I_{f} dienendes Eingangs-oder Spannungssignal Uₑ₁, Uₑ₂, welches dem jeweiligen Erfassungssystem E1 bzw. E2 zugeführt wird.

Das jeweils in Auslösefunktion arbeitende Erfassungssystem E1,E2 wandelt die Eingangsspannung E in Uₑ₁ bzw. Uₑ₂ in eine Ausgangsspannung Uₐ und einen entsprechenden, durch das Auslöserelais 3 geführten Strom Iₐ um. Überschreitet der Fehlerstrom I_{f} einen im ersten Erfassungssystem E1 oder im zweiten Erfassungssystem E2 und/oder im Auslöserelais 3 eingestellten Soll- oder Auslösewert, so wird das mit den beiden Erfassungssystemen E1,E2 ausgangsseitig verbundene Auslöserelais 3, das vorzugsweise als Haltemagnet ausgeführt ist, ausgelöst. Dadurch öffnet die mit dem Auslöserelais 3 gekoppelte Schaltmechanik 4 die Schaltkontakte des Kontaktsystems 5, das auf alle Leiter Lᵢ des Leiternetzes LN wirkt.

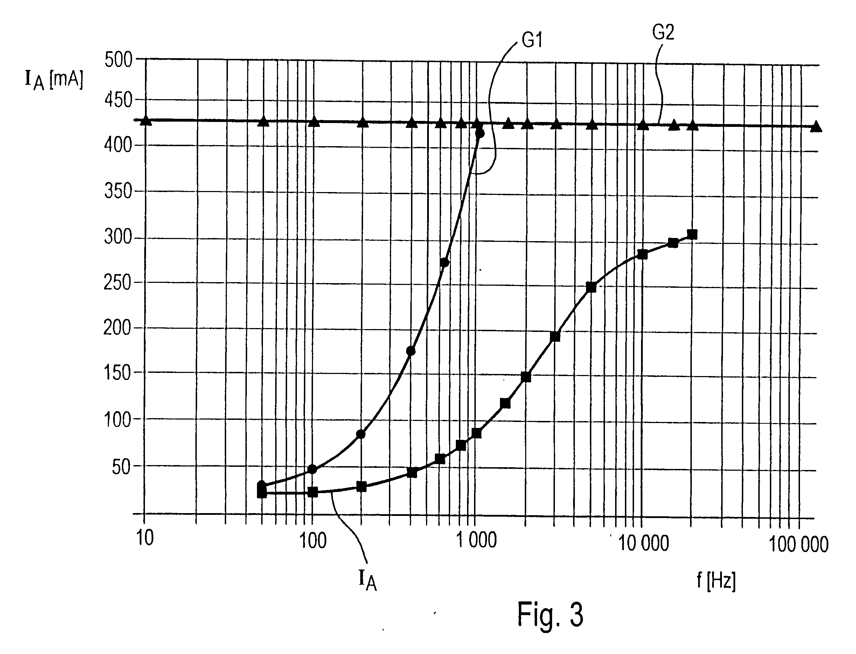

Das erste Erfassungssystem E1 ist dabei vorzugsweise auf Fehlerströme I_{f} von 50Hz abgestimmt, so dass bei dieser Fehlerstromfrequenz f die Auslösebedingungen bei sinusförmigen Wechselfehlerströmen entsprechend Typ AC der Norm EN 61008 oder gleichzeitig pulsierenden Gleichfehlerströmen gemäß Typ A der Norm EN 61008 erfüllt werden. Mit zunehmender Fehlerstromfrequenz f steigt der Verlauf des Auslösefehlerstroms I_{A} über der Fehlerstromfrequenz f gerade derart steil an, dass dieser noch mit ausreichendem Sicherheitsabstand unterhalb der in FIG 3 dargestellten Grenzkurve G1 für Herzkammerflimmern gemäß der Vorschrift IEC 60479 liegt.

Der in FIG 3 im Frequenz-/Auslösefehlerstrom-Diagramm mit auf der Abszisse logarithmisch aufgetragener Fehlerstromfrequenz f und an der Ordinate aufgetragenem Auslösefehlerstrom I_{A} dargestellte Verlauf des Auslösefehlerstroms I_{A} steigt mit zunehmender Fehlerstromfrequenz f vorteilhafterweise derart steil an, dass die FI-Schutzeinrichtung 1 gegenüber Fehlerströmen I_{f} im höheren Frequenzbereich, insbesondere transienten Fehlerströmen I_{f}, unempfindlich ist. Solche transienten, d. h. nicht periodischen einmaligen elektrischen Störspannungen oder Störimpulse können im Leiternetz LN bei bestimmten Betriebsmitteln auch häufig auftreten.

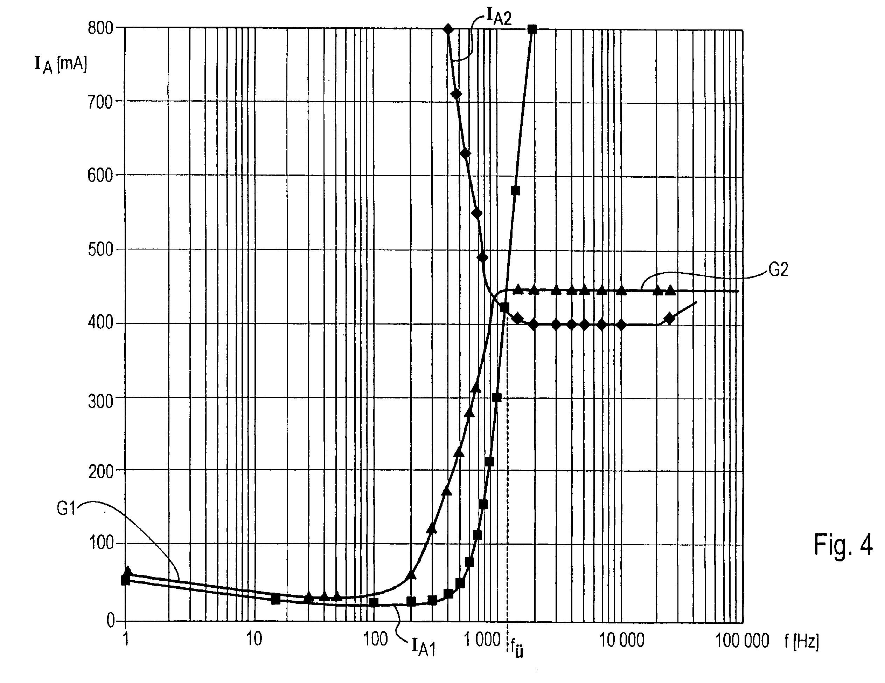

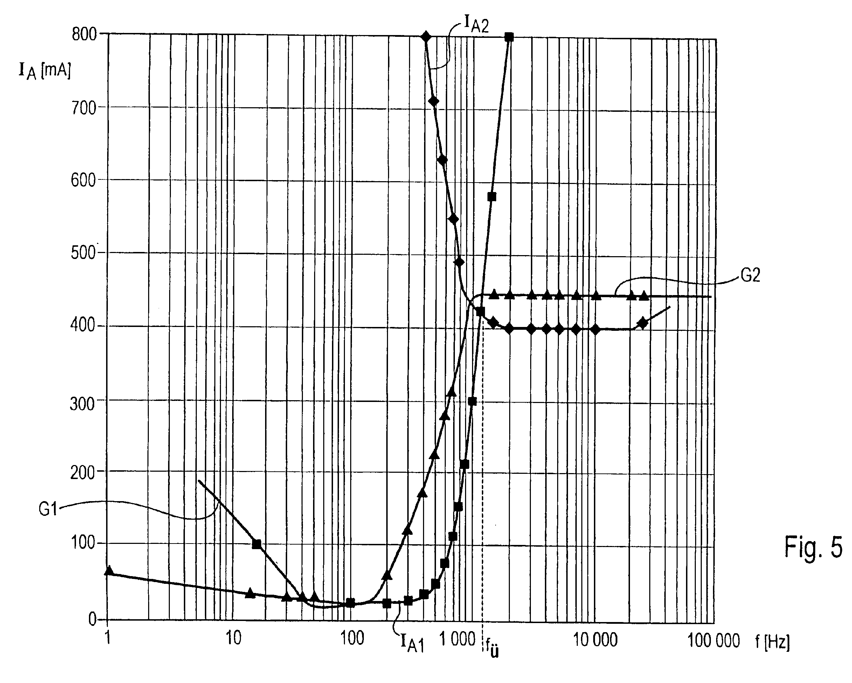

Beim Ausführungsbeispiel arbeitet das erste Erfassungssystem E1 unverzögert, wobei z. B. bei einer Fehlerstromfrequenz f von z. B. 1kHz und einem Fehlerstrom I_{f} von 420mA, der die Obergrenze für Herzkammerflimmern darstellt, Auslösezeiten von τ ≤ 40ms erreicht werden. Das erste Erfassungssystem E1 kann jedoch auch kurzzeitverzögert ausgeführt sein. Bevor mit zunehmender Fehlerstromfrequenz f der Auslösefehlerstrom I_{A} des ersten Erfassungssystems E1 den für Brandschutz maximal vertretbaren Wert von 430mA erreicht, übernimmt das zweite Erfassungssystem E2 die Auslösefunktion. Dies erfolgt ab der Übernahmefrequenz F_{ü} von größer oder gleich 1kHz. Dies ist in den Figuren 4 und 5 für eine pulsstromsensitive bzw. allstromsensitive FI-Schutzeinrichtung 1 im jeweiligen Frequenz-/Auslösefehlerstrom-Diagramm veranschaulicht.

Anhand der in den Figuren 4 und 5 gezeigten Diagramme ist veranschaulicht, wie der jeweilige Auslösefehlerstrom I_{A1} und I_{A2} des ersten Erfassungssystems E₁ bzw. des zweiten Erfassungssystems E2 verläuft. Dabei ist erkennbar, dass sich die beiden Auslösefehlerstromkurven I_{A1} und I_{A2} sowohl unterhalb der Grenzkurve G1 für Herzkammerflimmern als auch unterhalb der Grenzkurve G2 für Brandschutz bei der Übernahmefrequenz f_{ü} schneiden.

Das zweite Erfassungssystem E2 ist derart dimensioniert, dass der Auslösefehlerstrom I_{A} von der Übernahmefrequenz f_{ü} bis zu einer Fehlerstromfrequenz f von mindestens 20kHz mit ausreichendem Abstand unterhalb des für den Brandschutz maßgebenden Wertes von 430mA liegt. Gleichzeitig sollte in diesem Frequenzbereich der Auslösefehlerstrom Iₐ größer als 200mA sein, damit die FI-Schutzeinrichtung 1 gegenüber transienten Fehlerströmen I_{f} im höheren Frequenzbereich, wie diese z. B. bei Schalthandlungen im Leiternetz LN auftreten, unempfindlich ist.

Die FI-Schutzeinrichtung 1 ist darüber hinaus derart dimensioniert, dass eine Stoßstromfestigkeit größer 1000A mit einer 8/20µs-Welle nach der Vorschrift VDE 0432, Teil 2, gewährleistet ist. Bei einer derartigen Stoßstromprüfung werden Stoßströme, wie diese infolge von Blitzschlägen auftreten können, simuliert. Dabei wird die Nichtauslösung bei zeitlich sehr kurzen (z. B. 8µs Anstiegszeit und 20µs Rückenhalbwertszeit), jedoch in der Amplitude sehr hohen Fehlerströmen I_{f} von z. B. 250 A gefordert.

Bei Auftreten eines Fehlerstroms I_{f} wird in der Sekundärwicklung N1 des ersten Erfassungssystems E1 eine Eingangsspannung Uₑ₁ induziert, die mittels eines durch vier Dioden V3 bis V6 gebildeten Brückengleichrichters gleichgerichtet und mit einem diesem gleichstromseitig parallelgeschalteten Glättungskondensator C3 geglättet wird. Die gleichgerichtete Ausgangsspannung Uₐ erzeugt einen Ausgangsstrom Iₐ durch das Auslöserelais 3. Sobald der Fehlerstrom I_{f} den Auslösewert erreicht, löst das Auslöserelais 3 aus und öffnet über die Schaltmechanik 4 die Schalter des Kontaktsystems 5 der FI-Schutzeinrichtung 1.

Eine der Sekundärwicklung N1 im ersten Erfassungssystem E1 parallelgeschaltete Suppressordiode V1 begrenzt die in der Sekundärwicklung N1 induzierte Spannung auf einen bestimmten Wert, um einerseits die Bauelemente des Erfassungssystems E1 vor Überspannungen zu schützen, und um andererseits eine hohe Fehlauslösefestigkeit der FI-Schutzeinrichtung 1 bei über die durch die Leiter Li,N gebildete Primärwicklung des Summenstromwandlers 2 fließenden Stoßströmen, z. B. infolge von Blitzeinschlägen, zu erreichen.

Ein im Erfassungssystem E1 dem Brückengleichrichter V3 bis V6 wechselstromseitig vorgeschalteter Reihenkondensator C1 bildet zusammen mit der Induktivität der Sekundärwicklung N1 einen auf etwa 50Hz abgestimmten Resonanzkreis, wodurch dem Auslöserelais 3 die maximale Auslösescheinleistung und damit die größtmögliche Auslöseenergie zur Verfügung gestellt wird. Ein der Sekundärwicklung N1 im ersten Erfassungssystem E1 parallelgeschalteter Kondensator C2 bildet einen Tiefpass und ist derart dimensioniert, dass der Auslösefehlerstrom I_{A} mit zunehmender Fehlerstromfrequenz f ansteigt, jedoch unterhalb der Grenzkurve G1 für Herzkammerflimmern bleibt. Ein wechselstromseitiger Reihenwiderstand R1 bewirkt, dass die Sekundärwicklung N1 des ersten Erfassungssystems E1 bei hohen Fehlerstromfrequenzen f nicht direkt über den Kondensator C2 kurzgeschlossen wird. Der Widerstand R1 wirkt somit bei hohen Fehlerstromfrequenzen f als Bürde für den Summenstromwandler 2 und ist in hohem Maße mitbestimmend für den Auslösefehlerstrom I_{A} des zweiten Erfassungssystems E2.

Eine dem Glättungskondensator C3 parallelgeschaltete Zenerdiode V11 begrenzt die Ausgangsspannung Uₐ am vorzugsweise als Haltemagnet ausgebildeten Auslöserelais 3 und verhindert dessen Ummagnetisierung bei hohen Fehlerströmen I_{f}, was andernfalls zu einem Auslöseversagen führen würde. Außerdem verbessert die Zenerdiode V11 die Stoßstromfestigkeit der Schutzeinrichtung 1. Die hier eingesetzte Zenerdiode V11 weist eine Zenerspannung von 1V auf und ist deshalb technologiebedingt in Durchlassrichtung betrieben.

Ab der Übernahmefrequenz f_{ü}, die beispielsweise zwischen 1kHz und 4kHz liegt, werden die Ausgangsspannung Uₐ und der Ausgangsstrom Iₐ (Ausgangssignal Uₐ,Iₐ) des ersten Erfassungssystems I1 kleiner als die Ausgangsspannung Uₐ bzw. der Ausgangsstrom Iₐ (Ausgangssignal Uₐ,Iₐ) des zweiten Erfassungssystems E1. Ab dieser Übernahmefrequenz f_{ü} übernimmt somit das zweite Erfassungssystem E2 die Auslösefunktion.

Das zweite Erfassungssystem E2 weist ebenfalls einen Brückengleichrichter mit vier Dioden V7 bis V10 auf. Ebenso ist der Sekundärwicklung N2 des zweiten Erfassungssystems E2 wechselstromseitig ein Reihenkondensator C4 nachgeschaltet, dessen Kapazität jedoch wesentlich kleiner ist als die Kapazität des Reihenkondensators C1 des ersten Erfassungssystems E1. Grund hierfür ist, dass das Erfassungssystem E2 auf eine höhere Resonanzfrequenz als das Erfassungssystem E1 abgestimmt ist. Dadurch wird erreicht, dass das zweite Erfassungssystem E2 im unteren Frequenzbereich, d. h. unterhalb der Übernahmefrequenz f_{ü} kein verwertbares Ausgangssignal Uₐ,Iₐ liefert und somit Überschneidungen der Ausgangssignale Uₐ, Iₐ der beiden Erfassungssysteme E1 und E2 verhindert werden. Die von einem hochfrequenten Fehlerstrom I_{f} in der Sekundärwicklung N2 des zweiten Erfassungssystem E2 induzierte Eingangsspannung Uₑ₂ wird analog vom Brückengleichrichter V7 bis V10 gleichgerichtet und ebenfalls mittels einer der Sekundärwicklung N2 parallelgeschalteten Suppressordiode V2 spannungsbegrenzt.

Damit kurzzeitige, hochfrequente Störfehlerströme I_{f} mit einer Zeitdauer von wenigen Millisekunden, wie diese beim Schalten von induktiven Verbrauchern an langen Leitungen auftreten, zu keinen Fehlauslösungen führen, ist das zweite Erfassungssystem E2 kurzzeitverzögert. Dabei ist die Auslösezeit bei einer Fehlerstromfrequenz I_{f} größer oder gleich 3kHz und einem Fehlerstrom I_{f} von 430mA zweckmäßigerweise ca. 300ms. Diese Auslösezeit ist somit deutlich kürzer als die geforderte Abschaltzeit im TN-Netz, so dass ein optimaler Brandschutz realisiert ist.

In der Sekundärwicklung N2 des zweiten Erfassungssystems E2 induzierte Störspannungen werden zunächst durch zwei hintereinander geschaltete Zenerdioden V12 und V13 begrenzt, wobei diese Reihenschaltung der beiden Zenerdioden V12 und V13 dem Brückengleichrichter V7 bis V10 gleichstromseitig parallelgeschaltet ist. Die Zenerdioden V12 und V13 weisen ebenfalls eine Zenerspannung von 1V auf und werden daher ebenfalls technologiebedingt in Durchlassrichtung betrieben. Beim Ansprechen der Zenerdioden V12 und V13 begrenzt ein Widerstand R2 die dabei auftretenden Stromspitzen auf einen für die Dioden V12, V13 verträglichen Wert.

Die Kurzzeitverzögerung wird mittels eines Zeitverzögerungsgliedes (Verzögerungsschaltung) des zweiten Erfassungssystems E2 aus einem wechselstromseitigen Parallelkondensator C5 und einem diesem vorgeschalteten Reihenwiderstand R3 bewirkt. Nach einem Störvorgang sorgt ein Parallelwiderstand R4 für eine vollständige Entladung des Kondensators C5.

Durch die kapazitive Kopplung der beiden Sekundärwicklungen N1 und N2 des den beiden Erfassungssystemen E1 und E2 gemeinsamen Summenstromwandlers 2 können infolge von hochfrequenten Störfehlerströmen I_{f} zusätzlich Kreisströme über die beiden Erfassungssysteme E1 und E2 sowie über das Auslöserelais 3 fließen. Die Kurzzeitverzögerung mittels des Verzögerungsgliedes R3,C5 als alleinige Maßnahme ist somit möglicherweise nicht ausreichend. Daher sind in das zweite Erfassungssystem E2 zwei Drosseln L1 und L2 eingefügt, so dass diese Kreisströme zuverlässig soweit gedämpft werden, dass kurzzeitige hochfrequente Störfehlerströme I_{f} bei Schalthandlungen im Netz zu keinen Fehlauslösungen führen.

Um eine gegenseitige Beeinflussung der Erfassungssysteme E1 und E2, die auf das diesen gemeinsame Auslöserelais 3 arbeiten, zu vermeiden, ist eine Entkopplungsdiode V14 dem Auslöserelais 3 vorgeschaltet. Die durch Gleichrichtung der Eingangsspannungen Uₑ₁ und Uₑ₂ mittels der beiden Erfassungssysteme E1 und E2 erzeugten Ausgangsgleichspannungen Uₐ werden somit über die Diode V14 entkoppelt. Dadurch wird erreicht, dass jeweils dasjenige Erfassungssystem E1,E2, das bei einer bestimmten Fehlerstromfrequenz f die jeweils höhere Ausgangsspannung Uₐ liefert, die Auslösefunktion übernimmt und das Auslöserelais 3 auslöst.

## Patentansprüche

1. Schutzeinrichtung, insbesondere Fehlerstrom-Schutzeinrichtung, mit mindestens einem Erfassungssystem (E1,E2) mit einem Summenstromwandler (2), dessen Sekundärwicklung (N1,N2) ein Auslöserelais (3) zur Betätigung einer ein Leiternetz (LN) schaltenden Schaltmechanik (4) nachgeschaltet ist, **ge kennzeichnet durch** ein die Auslösefunktion für Fehlerströme (I_{f}) einer Fehlerstromfrequenz (f) unterhalb einer Übernahmefrequenz (f_{ü}) übernehmendes erstes Erfassungssystem (E1), und **durch** ein die Auslösefunktion für Fehlerströme (I_{f}) ab der Übernahmefrequenz (F_{ü}) übernehmendes zweites Erfassungssystem (E2).

2. Schutzeinrichtung nach Anspruch 1, **dadurch gekennzeichnet, dass** die Übernahmefrequenz (f_{ü}) größer oder gleich 1kHz ist.

3. Schutzeinrichtung nach Anspruch 1 oder 2, **dadurch gekennzeichnet, dass** das erste Erfassungssystem (E1) auf eine unterhalb der Übernahmefrequenz (f_{ü}) liegende erste Fehlerstromfrequenz (f) abgestimmt ist, wobei der Auslösefehlerstrom (I_{A}) zumindest bis zur Übernahmefrequenz (f_{ü}) unterhalb einer ersten Grenzkuve (G1) für Herzkammerflimmern liegt, und dass das zweite Erfassungssystem (E2) derart abgestimmt ist, dass der Auslösefehlerstrom (I_{A}) oberhalb der Übernahmefrequenz (f_{ü}) unterhalb einer einen Brandschutz sicherstellenden zweiten Grenzkurve (G2) liegt.

4. Schutzeinrichtung nach Anspruch 3, **dadurch gekennzeichnet, dass** der Wandlerkern (6) des Summenstromwandlers (2) aus nanokristallinem oder amorphem Werkstoff gebildet ist.

5. Schutzeinrichtung nach einem der Ansprüche 1 bis 4, **dadurch gekennzeichnet, dass** das erste Erfassungssystem (E1) auf eine Fehlerstromfrequenz (f) von vorzugsweise 50Hz oder auf einen Frequenzbereich von 50Hz bis ca. 400Hz derart abgestimmt ist, dass bei dieser Fehlerstromfrequenz (f) bzw. in diesem Frequenzbereich die Auslösebedingungen bei sinusförmigen Wechselfehlerströmen (I_{f}) entsprechend Typ AC der Vorschrift EN 61008 (= VDE 0664 Teil 10) oder bei sinusförmigen Wechselfehlerströmen (I_{f}) und pulsierenden Gleichfehlerströmen (I_{f}) gemäß Typ A der Norm EN 61008 erfüllt ist.

6. Schutzeinrichtung nach einem der Ansprüche 1 bis 5, **dadurch gekennzeichnet, dass** der Summenstromwandler (2) eine dem ersten Erfassungssystem (E1) zugeordnete erste Sekundärwicklung (N1) und eine dem zweiten Erfassungssystem (E2) zugeordnete zweite Sekundärwicklung (E2) aufweist.

7. Schutzeinrichtung nach einem der Ansprüche 1 bis 6, **dadurch gekennzeichnet, dass** sowohl das erste Erfassungssystem (E1) als auch das zweite Erfassungssystem (E2) einen Gleichrichter (V3 bis V6 bzw. V7 bis V10) aufweisen, von denen jeder wechselstromseitig mit jeweils einer Sekundärwicklung (N1,N2) des Summenstromwandlers (2) verbunden ist, und die gleichstromseitig an das beiden Erfassungssystemen (E1,E2) gemeinsame Auslöserelais (3) geführt sind, dem gleichstromseitig eine Entkopplungsdiode (V14) vorgeschaltet ist.

8. Schutzeinrichtung nach Anspruch 6 oder 7, **dadurch gekennzeichnet, dass** das zweite Erfassungssystem (E2) mindestens eine Drossel (L1,L2) zur Kreisstromdämpfung aufweist.

9. Schutzeinrichtung nach einem der Ansprüche 1 bis 8, **dadurch gekennzeichnet, dass** das erste Erfassungssystem (E1) einen Tiefpass (C2) aufweist, der derart ausgelegt ist, dass der Auslösefehlerstrom (I_{A}) bis zur Übernahmefrequenz (f_{ü}) mit zunehmender Fehlerstromfrequenz (f) ansteigt und dabei unterhalb der Grenzkuve (G1) für Herzkammerflimmern liegt.

10. Schutzeinrichtung nach einem der Ansprüche 6 bis 9, **dadurch gekennzeichnet, dass** das erste Erfassungssystem (E1) wechselstromseitig einen Reihenwiderstand (R1) aufweist.

11. Schutzeinrichtung nach einem der Ansprüche 6 bis 10,
**dadurch gekennzeichnet, dass** das erste Erfassungssystem (E1) einen ersten Reihenkondensator (C1) aufweist, und dass das zweite Erfassungssystem (E2) einen zweiten Reihenkondensator (C4) mit gegenüber dem ersten Reihenkondensator (C1) vergleichsweise kleiner Kapazität aufweist.

12. Schutzeinrichtung nach einem der Ansprüche 6 bis 10,
**dadurch gekennzeichnet, dass** dem Gleichrichter (V3 bis V6) des ersten Erfassungssystems (E1) gleichstromseitig ein Glättungskondensator (C3) nachgeschaltet ist.

13. Schutzeinrichtung nach einem der Ansprüche 1 bis 12,
**dadurch gekennzeichnet, dass** das zweite Erfassungssystem (E2) eine Zeitverzögerungsglied (R3,C5) aufweist, das durch einen Parallelkondensator (C5) und einen Reihenwiderstand (R3) gebildet ist.

14. Schutzeinrichtung nach einem der Ansprüche 1 bis 13,
**dadurch gekennzeichnet, dass** dem Auslöserelais (3) im ersten Erfassungssystem (E1) eine erste Zenerdiode (V11) und im zweiten Erfassungssystem (E2) mindestens eine zweite Zenerdiode (V12,V13) parallelgeschaltet ist.

15. Schutzeinrichtung nach einem der Ansprüche 1 bis 14,
**dadurch gekennzeichnet, dass** jedes Erfassungssystem (E1,E2) einen Überspannungsschutz (V1,V2) aufweist.

## Claims

1. Protective device, in particular a fault current protective device, having at least one detection system (E1, E2) with a core balance transformer (2) whose secondary winding (N1, N2) is followed by a tripping relay (3) for operating a switching mechanism (4) which switches a conductor network (LN), **characterized by** a first detection system (E1), which carries out the tripping function for fault currents (I_{f}) at a fault current frequency (f) below a changeover frequency (f_{ü}), and by a second detection system (E2) which carries out the tripping function for fault currents (I_{f}) above the changeover frequency (F_{ü}).

2. Protective device according to Claim 1, **characterized in that** the changeover frequency (fᵤ) is not less than 1 kHz.

3. Protective device according to Claim 1 or 2, **characterized in that** the first detection system (E1) is matched to a first fault current frequency (f), which is below the changeover frequency (f_{ü}) with the tripping fault current (I_{A}) being below a first limit curve (G1) for ventricular fibrillation at least up to the changeover frequency (f_{ü}), and **in that** the second detection system (E2) is tuned such that the tripping fault current (I_{A}) above the changeover frequency (f_{ü}) is below a second limit curve (G2) which ensures fire protection.

4. Protective device according to Claim 3, **characterized in that** the transformer core (6) of the core balance transformer (2) is formed from nanocrystalline or amorphous material.

5. Protective device according to one of Claims 1 to 4, **characterized in that** the first detection system (E1) is matched to a fault current frequency (f) of preferably 50 Hz or to a frequency band from 50 Hz to about 400 Hz, such that, at this fault current frequency (f), or in this frequency band, the tripping conditions are satisfied for sinusoidal alternating fault currents (I_{f}) of Type AC according to EN Standard 61008 (= VDE 0664 Part 10), or are satisfied for sinusoidal alternating fault currents (I_{f}) and pulsating direct fault currents (I_{f}) of Type A according to EN Standard 61008.

6. Protective device according to one of Claims 1 to 5, **characterized in that** the core balance transformer (2) has a first secondary winding (N1), which is associated with the first detection system (E1), and a second secondary winding (E2), which is associated with the second detection system (E2).

7. Protective device according to one of Claims 1 to 6, **characterized in that** both the first detection system (E1) and the second detection system (E2) have a rectifier (V3 to V6 and V7 to V10, respectively), each of which is connected on the alternating current side to a respective secondary winding (N1, N2) of the core balance transformer (2), and are connected on the direct current side to the tripping relay (3), which is common to both detection systems (E1, E2) and has a decoupling diode (V14) upstream of it on the direct current side.

8. Protective device according to Claim 6 or 7, **characterized in that** the second detection system (E2) has at least one inductor (L1, L2) for circulating current damping.

9. Protective device according to one of Claims 1 to 8,
**characterized in that** the first detection system (E1) has a low-pass filter (C2), which is designed such that the tripping fault current (I_{A}) rises with increasing fault current frequency (f) up to the changeover frequency (f_{ü}) and is in this case below the limit curve (G1) for ventricular fibrillation.

10. Protective device according to one of Claims 6 to 9, **characterized in that** the first detection system (E1) has a series resistor (R1) on the alternating current side.

11. Protective device according to one of Claims 6 to 10, **characterized in that** the first detection system (E1) has a first series capacitor (C1), and **in that** the second detection system (E2) has a second series capacitor (C4), whose capacitance is less than that of the first series capacitor (C1).

12. Protective device according to one of Claims 6 to 10, **characterized in that** the rectifier (V3 to V6) in the first detection system (E1) is followed, on the direct current side, by a smoothing capacitor (C3).

13. Protective device according to one of Claims 1 to 12, **characterized in that** the second detection system (E2) has a time delay element (R3,C5), which is formed by a parallel capacitor (C5) and a series resistor (R3).

14. Protective device according to one of Claims 1 to 13, **characterized in that** the tripping relay (3) has a first zener diode (V11) connected in parallel with it in the first detection system (E1), and has at least one second zener diode (V12,V13) connected in parallel with it in the second detection system (E2).

15. Protective device according to one of Claims 1 to 14, **characterized in that** each detection system (E1,E2) has overvoltage protection (V1,V2).

## Revendications

1. Dispositif de protection, en particulier dispositif de protection contre les courants de défaut, avec au moins un système de détection (E1, E2) avec un convertisseur de courant résiduel (2) en aval de l'enroulement secondaire (N1, N2) duquel est monté un relais de déclenchement (3) pour actionner une mécanique de commutation (4) commutant un réseau conducteur (LN), **caractérisé par** un premier système de détection (E1) qui prend en charge la fonction de déclenchement pour des courants de défaut (I_{f}) d'une fréquence de courant de défaut (f) inférieure à une fréquence de prise en charge (f_{ü}) et par un deuxième système de détection (E2) qui prend en charge la fonction de déclenchement pour des courants de défaut (I_{f}) à partir de la fréquence de prise en charge (f_{ü}).

2. Dispositif de protection selon la revendication 1,
**caractérisé en ce que** la fréquence de prise en charge (f_{ü}) est supérieure ou égale à 1 kHz.

3. Dispositif de protection selon la revendication 1 ou 2, **caractérisé en ce que** le premier système de détection (E1) est accordé sur une première fréquence de courant de défaut (f) inférieure à la fréquence de prise en charge (f_{ü}), le courant de défaut de déclenchement (I_{A}) étant en dessous d'une première courbe limite (G1) de fibrillation ventriculaire du coeur au moins jusqu'à la fréquence de prise en charge (f_{ü}) et **en ce que** le deuxième système de détection (E2) est accordé de manière telle que le courant de défaut de déclenchement (I_{A}), au-dessus de la fréquence de prise en charge (f_{ü}), est en dessous d'une deuxième courbe limite (G2) qui assure une protection contre les incendies.

4. Dispositif de protection selon la revendication 3,
**caractérisé en ce que** le coeur (6) du convertisseur de courant résiduel (2) est constitué d'un matériau nanocristallin ou amorphe.

5. Dispositif de protection selon l'une des revendications 1 à 4, **caractérisé en ce que** le premier système de détection (E1) est accordé sur une fréquence de courant de défaut (f) qui est préférentiellement de 50 Hz ou sur une gamme de fréquences de 50 Hz à environ 400 Hz de manière telle que, à cette fréquence de courant de défaut (f) resp. dans cette gamme de fréquences, la condition de déclenchement est remplie conformément au type AC de la norme EN 61008 (= VDE 0664, partie 10) dans le cas de courants de défaut alternatifs sinusoïdaux (I_{f}) ou conformément au type A de la norme EN 61008 dans le cas de courants de défaut alternatifs sinusoïdaux (I_{f}) et de courants de défaut continus pulsés (I_{f}).

6. Dispositif de protection selon l'une des revendications 1 à 5, **caractérisé en ce que** le convertisseur de courant résiduel (2) comporte un premier enroulement secondaire (N1) associé au premier système de détection (E1) et un deuxième enroulement secondaire (E2) associé au deuxième système de détection (E2).

7. Dispositif de protection selon l'une des revendications 1 à 6, **caractérisé en ce que** non seulement le premier système de détection (E1), mais aussi le deuxième système de détection (E2) comportent un redresseur (V3 à V6 resp. V7 à V10), chaque redresseur étant relié, côté courant alternatif, à respectivement un enroulement secondaire (N1, N2) du convertisseur de courant résiduel (2), et amené, côté courant continu, au relais de déclenchement (3) commun aux deux systèmes de détection (E1, E2) en amont duquel est montée une diode de découplage (V14) côté courant continu.

8. Dispositif de protection selon la revendication 6 ou 7, **caractérisé en ce que** le deuxième système de détection (E2) comporte au moins une self (L1, L2) pour amortir le courant circulaire.

9. Dispositif de protection selon l'une des revendications 1 à 8, **caractérisé en ce que** le premier système de détection (E1) comporte un passe-bas (C2) qui est conçu de manière telle que le courant de défaut de déclenchement (I_{A}) augmente jusqu'à la fréquence de prise en charge (f_{ü}) à mesure que la fréquence de courant de défaut (f) augmente tout en restant en dessous de la courbe limite (G1) de fibrillation ventriculaire du coeur.

10. Dispositif de protection selon l'une des revendications 6 à 9, **caractérisé en ce que** le premier système de détection (E1) comporte une résistance série (R1) côté courant alternatif.

11. Dispositif de protection selon l'une des revendications 6 à 10, **caractérisé en ce que** le premier système de détection (E1) comporte un premier condensateur série (C1) et **en ce que** le deuxième système de détection (E2) comporte un deuxième condensateur série (C4) avec une capacité relativement petite par rapport au premier condensateur série (C1).

12. Dispositif de protection selon l'une des revendications 6 à 10, **caractérisé en ce qu'**un condensateur de lissage (C3) est monté en aval du redresseur (V3 à V6) du premier système de détection (E1) côté courant continu.

13. Dispositif de protection selon l'une des revendications 1 à 12, **caractérisé en ce que** le deuxième système de détection (E2) comporte un organe de retard (R3, C5) qui est constitué par un condensateur parallèle (C5) et une résistance série (R3).

14. Dispositif de protection selon l'une des revendications 1 à 13, **caractérisé en ce que** sont montées en parallèle avec le relais de déclenchement (3) une première diode Zener (V11) dans le premier système de détection (E1) et au moins une deuxième diode Zener (V12, V13) dans le deuxième système de détection (E2).

15. Dispositif de protection selon l'une des revendications 1 à 14, **caractérisé en ce que** chaque système de détection (E1, E2) comporte une protection contre la surtension (V1, V2).
